# EUROPÄISCHE PATENTSCHRIFT

(11) **EP 0 476 451 B1**
(45) Veröffentlichungstag und Bekanntmachung des Hinweises auf die Patenterteilung: **14.08.1996**
(21) Anmeldenummer: 91115054.8
(22) Anmeldetag: 06.09.1991
(51) Int. Cl.: C08J 5/06, F16F 9/04, C08L 21/00

(54) **Luftfederbalg aus einem dynamisch belastbaren elastomeren Verbundwerkstoff**
Pneumatic spring bellow formed from a dynamically loadable rubber composite material
Ressort pneumatique en un matériau composite élastomère pouvant être sollicité dynamiquement

(30) Priorität: 08.09.1990 DE 4028601
(43) Veröffentlichungstag der Anmeldung: 25.03.1992
(73) Patentinhaber: Continental Aktiengesellschaft, D-30165 Hannover (DE)
(72) Erfinder: Keller, Michael, Dr., W-3000 Hannover 1 (DE); Schreck, Klaus, W-3000 Hannover 1 (DE); Dietrich, Siegfried, W-3200 Hildesheim (DE); Thurow, Gerhard, W-3008 Garbsen 1 (DE)

(56) Entgegenhaltungen:
- FR-A- 1 499 472
- US-A- 3 276 948
- WORLD PATENTS INDEX LATEST Derwent Publications Ltd., London, GB; AN 88-086819 (13) & JP-A-62 266 240
- WORLD PATENTS INDEX LATEST Derwent Publications Ltd., London, GB; AN 87-316535 (45) & JP-A-62 223 282
- "Rubber Technology and Manufacture", 2nd ed. (1982), p.338-339

## Beschreibung

Die Erfindung betrifft einen Luftfederbalg aus einem dynamisch belastbaren, vernetzbaren Verbundwerkstoff, mit zwei in einer aus einer Innengummischicht und einer Außengummischicht bestehenden Elastomermatrix eingebetteten Festigkeitsträgerlagen aus textilem Gewebe, deren Gewebefäden vor dem Einbetten in die Elastomermatrix mit einer wäßrigen Dispersion aus Kunstharz und Latex retexiert sind und mit einer zweiten Beschichtung aus einem organischen Haftvermittler, und mit einer Skimschicht aus Kautschukmischung auf den Festigkeitsträgerlagen.

In der Kautschukindustrie werden textile Gewebe bei der Herstellung dynamisch belastbarer Produkte, wie Luftfedern, als Festigkeitsträgerlagen verwendet. Die Haltbarkeit der Luftfedern hängt von der Haftung zwischen der Festigkeitsträgerlage und der Elastomermatrix ab.

Als Festigkeitsträgerlagen werden überwiegend Gewebe aus synthetischen Fasern, wie z.B. Nylonfasern, verwendet. Diese haben gegenüber natürlichen Fasern ausgezeichnete Eigenschaften, wie z.B. hohe Wechselbiegetüchtigkeit, Zerreißfestigkeit, gleichmäßige Dehnfähigkeit. Als Nachteil ist anzusehen, daß die Oberfläche dieser synthetischen Corde glatt und wenig gummifreundlich ist.

Zur Erzielung einer guten Haftung ist es bekannt, das Gewebe vor dem Gummieren zu präparieren. Dazu wird das Gewebe durch eine Tauchanlage geführt, in der eine wäßrige Zweikomponen-tenlösung aus Kunstharz und Latex enthalten ist. Als Kunstharzlösung findet überwiegend Resorcin-Formaldehyd Verwendung, während der Latex üblicherweise ein Vinylpyridin-Latex ist.

Das so präparierte Gewebe wird getrocknet. Diese beiden Vorgänge werden in der Fachsprache unter dem Begriff "Retexieren" oder "Latexieren" zusammengefaßt.

Das retexierte Gewebe wird mit einer polaren Kautschukmischung, z.B. Polychloroprenkautschuk (CR), gummiert, damit sich das Gewebe mit der Elastomermatrix durch die Vulkanisation gut zu einem Ganzen verbinden läßt.

Aus der US-PS 42 10 475 ist ein Verfahren zur Behandlung eines Reifencordes für eine gute Gummi-Cord-Haftung bekannt, bei dem ebenfalls eine wäßrige Haftvermittlerlösung (Dip) eingesetzt wird. Bei ihm wird lediglich das übliche Resorcin-Formaldehydharz durch Ligninsulfonate ersetzt.

Aus der US-PS 3 276 948 ist ein Verfahren zur Herstellung eines dynamisch belastbaren elastomeren Verbundwerkstoffes bekannt, das ein Verstärkungsgewebe aufweist, das zwei Haftvermittlungsschichten aufweist. Die zweite Haftvermitt-lungsschicht besteht aus einem Lösungsmittel Toluol und darin gelöstem chlorsulfoniertem Polyäthylen. Der Verbundwerkstoff ist für Reifencord vorgeschlagen. Luftfederbälge werden nicht angesprochen.

Bei dynamisch sehr hoch belasteten Luftfedern im Pkw-Bereich ist es durch die steigenden Produktanforderungen nicht immer möglich, eine befriedigende Lebensdauer zu erzielen. Die hohe Biegewechselbelastung ist die Ursache für eine mögliche Zerstörung des Luftfederbalges in der Verbindung von Festigkeitsträgerlage und Gummideckschichten.

Der Erfindung liegt die Aufgabe zugrunde, einen Luftfederbalg der eingangs geschilderten Art zu schaffen, der auch bei hohen Biegewechselbelastungen eine gute Haftung zwischen Festigkeitsträgerlage und Elastomermatrix aufweist.

Die Aufgabe wird erfindungsgemäß dadurch gelöst, daß die zweite Beschichtung, die zwischen der Retexierung und der Skimschicht angeordnet ist, durch Anwendung einer vernetzbaren, polaren Kautschuk enthaltenden organischen Lösung erhalten wird.

Die zweite Beschichtung auf dem retexierten Gewebe wird in einer Tauchanlage vorgenommen. Das retexierte Gewebe wird gut benetzt, da der polare Kautschuk der zweiten Beschichtung in organischer Lösung vorliegt. Der polare Kautschuk der zweiten Beschichtung geht mit dem Latex der ersten Gewebepräparierung eine gummi-elastische Verbindung ein, so daß der Übergang Festigkeitsträger / Elastomermatrix bezüglich bestimmter Eigenschaften (wie z.B. das Dehnungsverhalten) sanfter ausfällt. Durch das gute Benetzungsverhalten der organischen Haftvermittlerlösung wird eine homogene Verbindung zwischen dem Festigkeitsträger und der als Skimschicht aufgebrachten Kautschukmischung erreicht.

Nach dem Einbetten des gummierten Gewebes in die Elastomermatrix liegt ein Verbundwerkstoff vor, aus dem dynamisch hoch belastete Luftfederbälge für Pkw-Aufhängungen, die eine hohe Biegewechselbeständigkeit aufweisen müssen, geschaffen werden können.

Die überraschende Verbesserung wird darauf zurückgeführt, daß das chlorsulfonierte Polyäthylen (CSM) aus der organischen Haftvermittlerlösung sich gut mit dem Latex des retexierten Gewebes verbindet. Auf der anderen Seite führt das CSM zu einer verbesserten, homogenen Haftung mit der umgebenden, aufgebrachten Skimschicht aus Kautschukmischung. Der als chlorsulfoniertes Polyäthylen (CSM) aufgebrachte polare Kautschuk führt zu einer hohen Haftung bei gleichzeitig hoher Biegewechselbeständigkeit der Bindungsschichten.

Die höhere Polarität des chlorsulfonierten Polyäthylens (CSM) verglichen mit der des Vinylpyridin-Latex bewirkt eine höhere Bindungskraft. Zudem ist CSM ein gegen Sonnenlicht und Sauerstoff sehr beständiges Polymer, so daß für die nicht lichtbeständige RFL-Präparierung eine vorteilhafte Schutzschicht entsteht.

Die Haftvermittlerlösung kann Feststoffanteile wie Ruß und Magnesiumoxid enthalten. Ruß dient zur Schwarzfärbung und das Magnesiumoxid ist Bestandteil des Vernetzungssystems.

Die zusätzliche Haftvermittlerschicht wird in einer Dicke von 3 bis 5 Mikrometer aufgetragen.

Die Luftfeder ist dadurch gekennzeichnet, daß die zweite Beschichtung aus einer polaren Kautschuk enthaltenden organischen Lösung hergestellt wird und zwischen der ersten Beschichtung und dem umgebenden Gummi angeordnet ist.

Nachfolgend wird ein Ausführungsbeispiel anhand der Zeichnung näher beschrieben. Es zeigt.
- Fig. 1: ein bandartiges Produkt aus einem elastomeren Verbundwerkstoff im Schnitt,
- Fig. 2: einen einzelnen Gewebefaden der Festigkeitsträgerlage des in Fig. 1 gezeigten Bandes im Längsschnitt.

In einer Tauchbadanlage wird ein Nyloncordgewebe durch eine wäßrige Lösung aus Resorcin-Formaldehyd und Vinylpyridin (VP)-Latex gezogen. Nach dem anschließenden Trocknen der so erzielten Beschichtung wird das retexierte Gewebe einer zweiten Tauchbadanlage zugeführt. In dieser zweiten Tauchbadanlage liegt eine Lösung aus CSM-Kautschuk und dispergierten Feststoffen in Toluol vor.

Die Lösung in der zweiten Tauchbadanlage hat folgende Bestandteile:
- 10 Tle.: Chlorsulfoniertes Polyäthylen (CSM)
- 5 Tle.: Epoxidharz
- 1 Tl.: Härter (Polyamin-Typ)
- 4 Tle.: Magnesiumoxid
- 2 Tle.: Ruß
- 78 Tle.: Toluol.

Nach dem Tränken der Gewebebahn erfolgt ein weiterer Trocknungsvorgang.

Die mit den beiden Haftvermittlungsschichten versehene Gewebebahn wird auf einem Dreiwalzenkalander nacheinander auf beiden Seiten mit je einer Kautschukmischungsschicht zum Ausgleich der Gewebezwischenräume gummiert. Das gummierte Gewebe 11 wird zweilagig in einem Kalander beidseitig mit Deckschichten 13 aus Kautschuk belegt.

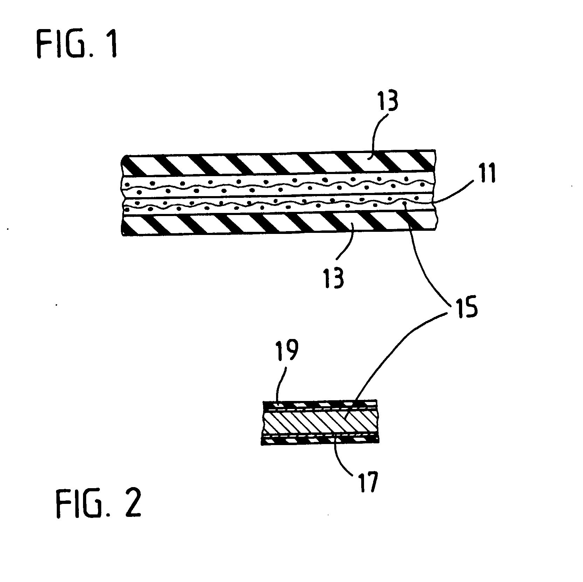

In Fig. 2 ist ein einzelner Nylonfaden 15 schematisch in einem Längsschnitt dargestellt, um die Behandlung seiner Oberfläche deutlicher hervorheben zu können. Die Oberfläche ist mit der ersten Beschichtung 17 aus Resorcin-Formaldehyd und Vinylpridin-Latex versehen, wobei diese Beschichtung 17 bereits vor der Verarbeitung des Gewebes 11 in der ersten Tauchbadanlage aufgebracht worden ist. Auf dieser ersten Beschichtung 17 ist eine zweite Beschichtung 19 aus CSM-Kautschuk und dispergierten Feststoffen vorhanden, die durch die Behandlung des Gewebes 11 in der zweiten Tauchbadanlage aufgebracht worden ist.

## Patentansprüche

1. Luftfederbalg aus einem dynamisch belastbaren, vernetzbaren Verbundwerkstoff mit zwei in einer aus einer Innengummischicht und einer Außengummischicht bestehenden Elastomermatrix eingebetteten Festigkeitsträgerlagen aus textilem Gewebe, deren Gewebefäden vor dem Einbetten in die Elastomermatrix retexiert sind und eine zweite Beschichtung aus einem organischen Haftvermittler aufweisen, und mit einer Skimschicht aus Kautschukmischung auf den Festigkeitsträgerlagen, wobei die zweite Beschichtung (19), die zwischen der Retexierung (17) und der Skimschicht angeordnet ist, durch Anwendung einer vernetzbaren, polaren Kautschuk enthaltenden organischen Lösung erhalten wird.

2. Luftfederbalg nach Anspruch 1, dadurch gekennzeichnet, daß der polare Kautschuk chlorsulfoniertes Polyäthylen ist.

## Claims

1. Air spring bellows formed from a dynamically loadable, cross-linkable composite material, said bellows] having two reinforcing member plies of textile fabric, said plies being embedded in an elastomeric matrix comprising an internal rubber layer and an external rubber layer, the filaments of said fabric being retexed prior to being embedded in the elastomeric matrix and having a second coating of an organic bonding agent, and said bellows having a skim layer of a rubber mixture on the reinforcing member plies, the second coating (19), which is disposed between the retexed portion (17) and the skim layer, being obtained by using a cross-linkable, polar, rubber-containing organic solution.

2. Air spring bellows according to claim 1, characterised in that the polar rubber is chlorosulphonated polyethylene.

## Revendications

1. Soufflet d'amortisseur pneumatique constitué d'un matériau composite réticulable, pouvant être contraint dynamiquement, comportant deux couches supports de résistance, en tissu textile, qui sont enrobées dans une matrice élastomère composée d'une couche intérieure de caoutchouc et d'une couches extérieure de caoutchouc et dont, avant leur enrobage dans la matrice élastomère, des fils du tissu passent dans une dispersion aqueuse de résine et de latex, et sont séchés, puis présentent un second revêtement constitué d'un accélérateur organique d'adhérence, et comportant une couche d'encollage, constitué d'un mélange de caoutchouc, sur les couches supports de résistance, le second revêtement (19), qui est disposé entre la partie passée dans le bain de résine et de latex (17) et la couche d'encollage, étant obtenu par emploi d'une solution organique réticulable, contenant un caoutchouc polaire.

2. Soufflet d'amortisseur pneumatique selon la revendication 1, caractérisé par le fait que le caoutchouc polaire est un polyéthylène chlorosulfoné.
